# EUROPÄISCHE PATENTANMELDUNG

(11) **EP 0 999 019 A2**
(43) Veröffentlichungstag der Anmeldung: **10.05.2000**
(21) Anmeldenummer: 99120732.5
(22) Anmeldetag: 20.10.1999
(51) Int. Cl.: B26D 9/00, B26D 11/00

(54) **Einrichtung zum Verarbeiten eines Substrates**

(30) Priorität: 22.10.1998 DE 29818847 U
(71) Anmelder: Maschinenfabrik GOEBEL GmbH, 64210 Darmstadt (DE)
(72) Erfinder: Belau, Lutz, 64347 Griesheim (DE)

(57) **Zusammenfassung**

Eine Einrichtung zum trennenden Be- oder Verarbeiten eines Substrates (28) hat miteinander verbindbare weitgehend wahlweise positionierbare Baueinheiten ( 1-4,33-39,106-110).

## Beschreibung

Die vorgeschlagene Einrichtung bezieht sich auf das technische Gebiet des trennenden Be- oder Verarbeitens eines Substrates mit relativ zu einer Gesamtmaschine austauschbaren, Be- oder Verarbeitungswerkzeuge enthaltenden in mehreren vorgesehenen Positionen befestigbaren oder aus der Gesamtmaschine entfernbaren Baueinheiten. Unter dem Begriff des trennenden Be- oder Verarbeitens eines Substrates ist beispielsweise das Perforieren von Bogen oder Bahnen aus Papier, Folie, Metall, Kunststoffod.dgl. zu verstehen. Daneben gibt es jedoch auch andere Be- oder Verarbeitungsverfahren, welche ebenfalls geeignet sind, auf ein Substrat einzuwirken, beispielsweise das Herstellen von Randlochungen in Bahnen, das Herstellen von Abheftlochungen, das Einarbeiten von sonstigen Perforationen sowohl in Lauf- oder Förderrichtung oder auch quer zur Förderrichtung des jeweiligen Substrates. Hierzu zählt beispielsweise auch das Schneiden von Bogen oder Bahnen, zum Beispiel in der Lauf- oder Förderrichtung bzw. Bearbeitungsrichtung des Substrates als auch schräg oder quer zu dieser Laufrichtung. Im entfernteren Sinne kann auch an das Stanzen sog. Etiketten od.dgl. verwiesen werden, auch an das Auftragen von Leim oder von Lacken in bestimmten Mustern aber auch an Einrichtungen und entsprechende Verfahren zum Markieren, Eindrucken oder dem Entfernen von nicht mehr gewünschten oder benutzten oder benutzbaren Teilen eines ursprünglich geschlossen vorliegenden Substrates wie beispielsweise das Entfernen sog. Butzen bei der Herstellung von Perforationen oder Etiketten, beispielsweise durch Ergreifen, Aufnadeln oder Absaugen oder dergleichen analoge andere Werkzeuge oder Arbeits- oder Herstellungsverfahren. Jedes dieser Beispiele und darüber hinaus auch weitere Beispiele benötigt entsprechend geformte und ausgebildete Werkzeuge zu seiner Durchführung und stellt daher jeweils für sich ein eigenes Herstellungs- oder Arbeitsverfahren dar, mit welchem das vorliegende Substrat, mindestens ein Bogen oder mindestens eine Bahn, bearbeitet oder verarbeitet werden kann. Es ist in diesem Zusammenhang ebenfalls möglich, daß das zu be- oder verarbeitende Substrat aus mehreren aufeinanderliegenden Lagen von Bahnen oder Bogen besteht, beispielsweise aus einem sog. Bahnenpaket, was der Einfachheit wegen im üblichen Sprachgebrauch ebenfalls mit dem Begriff "Bahn" bezeichnet wird, obwohl sich diese "Bahn" aus einer Mehrzahl von aufeinanderliegenden Teilbahnen sandwichartig oder paketartig zusammensetzt. Eine Einrichtung dieser Art ist beispielsweise auf Grund des US-Patentes 38 66 497 bekanntgeworden. Hier werden Perforationen in ein bahnförmiges Substrat eingearbeitet, was dazu führt, daß die sog. Perforiervorrichtungen dieser Vorveröffentlichung das herzustellende Substrat mit Perforierwerkzeugen bearbeiten, um somit beispielsweise eine Bahn zu erhalten, welche quer zu ihrer Laufrichtung mit Perforationen versehen ist und an diesen Perforationen in einem späteren Verarbeitungsgang, beispielsweise in einem sog. Zickzackfalzapparat in gewünschter Weise abknickt, so daß sich ein sog. Zickzackstapel ergibt. Daneben ist es möglich, die durch die verschiedensten Querperforationen erzielten Abschnitte des bahnartigen Substrates voneinander zu trennen, beispielsweise von Hand abzureißen, um auf diese Weise aus einer ursprünglich langen Bahn mindestens einen leichter handhabbaren Bogen zu gewinnen. Die Anzahl und Ausbildung dieser Beispiele ist nahezu unendlich groß und mannigfaltig, so daß hier nur beispielsweise auf einige konkrete Ausbildungen verwiesen werden kann. Die in dem genannten US-Patent zum Be- oder Verarbeiten des bahnartigen Substrates benutzten Werkzeuge sind jeweils austauschbar, so daß sie leicht gewechselt oder an verschiedene Lokalisationen innerhalb der maschinellen Einrichtung verbracht und dort betrieben werden können. Jedoch ist es mit der Einrichtung dieses US-Patentes nur möglich, sog. Querperforationen herzustellen; andere Be- oder Verarbeitungsmöglichkeiten bietet die Einrichtung dieser Vorveröffentlichung nicht. Aus der DE-OS 27 34 038 ist daneben eine Einrichtung bekannt, die es gestattet, verschiedene Baueinheiten für verschiedene Be- oder Verarbeitungsverfahren geeignete Werkzeuge wahlweise an der gleichen Stelle der gesamten Maschine in diese Maschine einzusetzen oder bei Bedarf aus dieser Stelle wieder zu entfernen. Es ist jedoch nicht möglich, den Ort der Be- oder Verarbeitung innerhalb dieser vorveröffentlichten Einrichtung wahlweise frei zu wählen oder gar mehr als zwei nach verschiedenen Be- oder Verarbeitungsverfahren arbeitende Be- oder Verarbeitungswerkzeuge gleichzeitig in ein- und demselben Durchlauf des zu be- oder verbeitenden Substrates sozusagen nebeneinanderher wirksam werden zu lassen. Es besteht daher das Bedürfnis, eine Einrichtung vorzuschlagen, welche variabler ist als vorbekannte Einrichtungen und mit der es möglich ist, Substrate auf vielfältigere Art als bisher zu be- oder verarbeiten, so daß mit einer einzigen maschinellen Einrichtung eine größtmögliche Vielfalt von zu be- oder verarbeitenden Substraten, d.h. mit der maschinellen Einrichtung herzustellenden Produkten erzielt werden kann. Dies wird mit den Merkmalen der beigefügten Ansprüche einzeln oder in beliebiger Kombination gelöst. Weitere Merkmale und Vorteile ergeben sich aus der nachfolgenden Beschreibung mehrerer Ausführungsbeispiele. Die einzelnen Merkmale der Ansprüche können je einzeln für sich oder zu mehreren beliebiger Kombination durch weitere Ausführungsformen oder Ausführungsbeispiele verwirklicht sein. Dafür kann Fachwissen zu Hilfe genommen werden. An Hand der in den beigefügten Figuren schematisch abgebildeten, den Erfindungsgedanken erläuternden und nicht etwa begrenzenden Ausführungsbeispiele wird die vorgeschlagene Lösung nunmehr näher erläutert. Die Ausführungsbeispiele können ebenfalls in verschiedener Weise abgeändert oder durch weitere Ausführungsbeispiele ergänzt werden, ohne den durch die Grundidee abgesteckten Rahmen zu verlassen. In den beigefügten Figuren sind im vorliegenden Zusammenhang nicht wesentliche, dem Fachmann hinreichend bekannte Maschinenteile wegen einer übersichtlicheren Darstellungsweise nicht dargestellt. Die Figuren zeigen vielmehr nur diejenigen Teile, die für die nähere Erläuterung der vorgeschlagenen Lösung und ihrer Vorteile erforderlich sind. Zur Stützung und Ergänzung der vorliegenden Beschreibung wird ausdrücklich auf die zum vorbekannten Stand der Technik angeführten Vorveröffentlichungen verwiesen, um unnötig aufwendige Wiederholungen zu vermeiden. Auf Grund der vorliegenden Anregungen ist es somit für den Fachmann nicht mehr notwendig, etwa erfinderisch tätig zu werden, um unter Einbeziehung seines Fachwissens weitere Anwendungen vorzunehmen, andere Einsatzbebiete zu erschließen oder weitere Ausführungsbeispiele zu entwickeln, falls sich dies als vorteilhaft oder gar von konstruktiver Seite her als notwendig erweisen sollte.

Die einzelnen Figuren bedeuten:
- Fig.1: schematische Seitenansicht eines ersten Ausführungsbeispiels
- Fig.2: schematische Seitenansicht eines zweiten Ausführungsbeispiels
- Fig.3: schematische Seitenansicht eines dritten Ausführungsbeispiels in anderem Maßstab als die Figuren 1 und 2

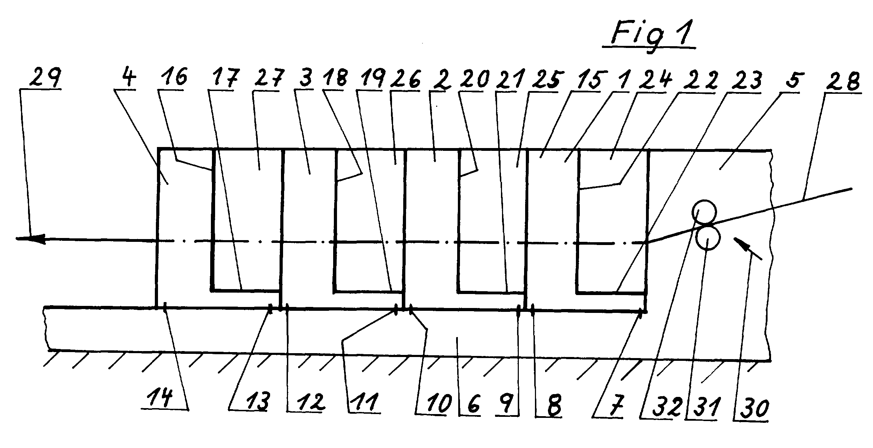

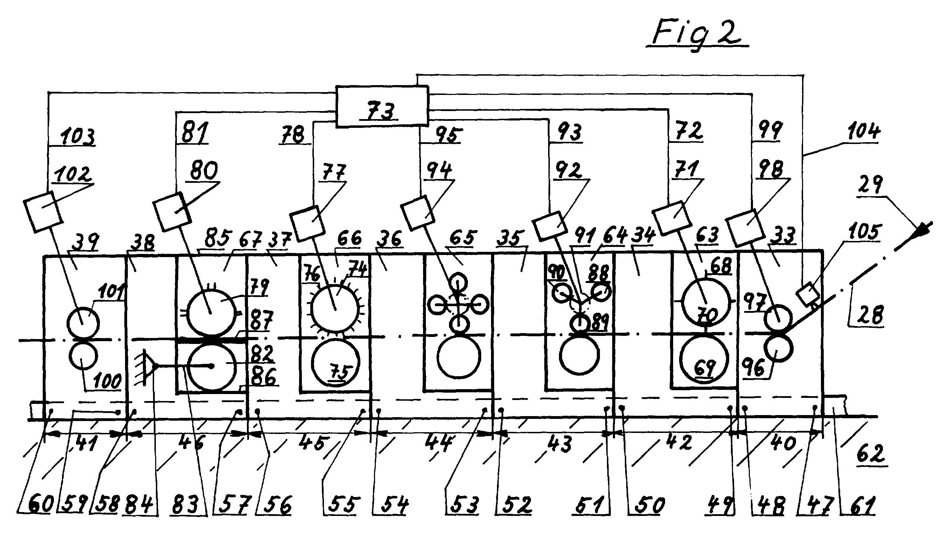

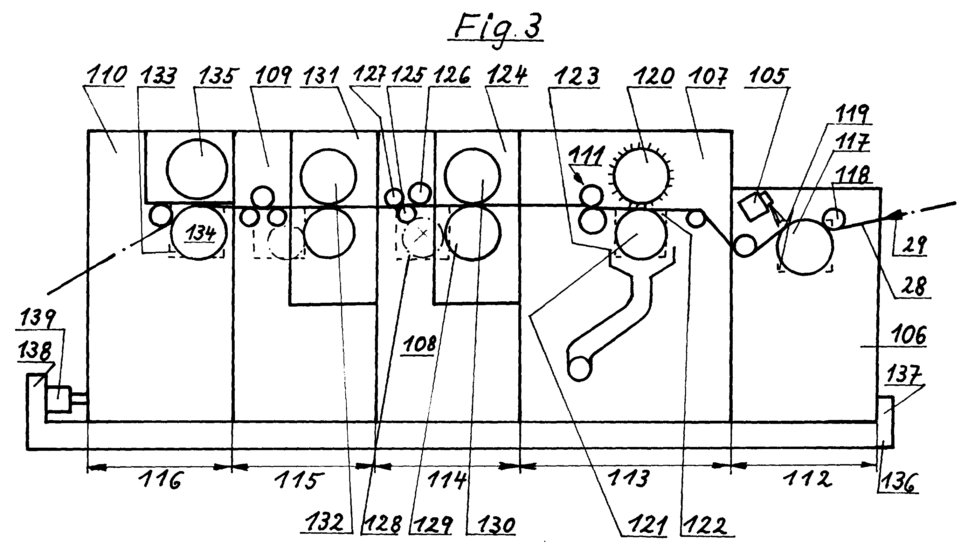

Aus Fig.1 ist insbesondere ersichtlich, daß mehrere Baueinheiten, beispielsweise die Baueinheiten 1 bis 4 in oder an oder auf einem Maschinengestell 5 aneinandergereiht sind. Insbesondere stellt ein Teil 6 des Maschinengestells 5 eine Art Schiene dar, auf welcher die Baueinheiten 1 bis 4 mit Hilfe der Schrauben 7 bis 14 befestigt werden können. In Blickrichtung auf Fig.1 besteht jede Baueinheit im wesentlichen aus zwei einander parallel angeordneten Seitenwänden, beispielsweise hat die Baueinheit 1 die Seitenwand 15, wovon in Blickrichtung auf Fig.1 nur die eine zu sehen ist, während die andere Seitenwand hinter der ersten Seitenwand 15 angeordnet ist. Die doppelte, einander parallele Anordnung von Seitenwänden ist jedoch in der Fachwelt bekannt, so daß die Maschinenkonstruktion im vorliegenden Zusammenhang und um unnötige Wiederholungen zu vermeiden nur schematisch und für den Fachmann genügend genau angedeutet ist. Jede Seitenwand ist mit Ausnehmungen versehen, die durch die Kanten 16 bis 23 angedeutet sind. In jede Ausnehmung kann jeweils eine Kassette 24 bis 27 eingesetzt oder aus dieser entnommen werden. Jede Kassette enthält Bearbeitungswerkzeuge zum Bearbeiten oder Verarbeiten eines Substrates 28, vorzugsweise derart, daß jeder Kassette mindestens ein eigenes Werkzeug oder ein eigenes Werkzeugpaar für jeweils einen Be- oder Verarbeitungsvorgang bzw. ein entsprechendes Verfahren zugeordnet ist. Beispielsweise enthält die eine Kassette Werkzeuge zum sog. Querperforieren, eine andere Kassette Werkzeuge zum Längsperforieren, wiederum eine andere Werkzeuge zum Längsschneiden oder für die Herstellung der Randlochung, für die Herstellung von Abheftlochungen usw.. Das Substrat 28 durchläuft in Richtung des Pfeiles 29 alle Baueinheiten, beispielsweise die Baueinheiten 1 bis 4 und somit auch die jeweils in diese Baueinheiten eingesetzten Kassetten 24 bis 27. Da die Baueinheiten 1 bis 4 mit Hilfe der Schrauben 7 bis 14 gegenüber dem Maschinengestell 5 verbindbar und befestigbar sind, sind die Baueinheiten damit auch untereinander verbunden. Jedoch ist es möglich, analogerweise Schraubverbindungen od.dgl. vorzusehen, welche die Baueinheiten ggfs. auch direkt untereinander zu verbinden in der Lage sind. An Stelle von Schraubverbindungen können auch jegliche anderen Verbindungen vorgesehen werden sofern sie sachdienlich sind wie beispielsweise hydraulische Druckmittelzylinder, deren Druck auf die einzelnen Baueinheiten derart wirkt, daß die einzelnen Baueinheiten nebeneinander, sozusagen nachbarschaftlich, aneinandergereiht und gegeneinder sowie miteinander fest zusammengedrückt werden, so daß sich für den jeweiligen Betrieb der maschinellen Einrichtung ein quasi fest zusammengesetztes Maschinengestell insgesamt ergibt. Daneben ist eine Fördervorrichtung 30 mit den umlaufenden, das Substrat 28 in Richtung des Pfeiles 29 fördernden Zylindern 31 und 32 im Maschinengestell 5 drehbar gelagert vorgesehen. Diese Fördervorrichtung kann daneben von einem geeigneten Motor in zweckentsprechender Weise drehbar angetrieben sein. Die Kassetten 24 bis 27 haben untereinander gleiche äußere Abmaße, so daß jede Kassette je nach Wahl des Maschinenbetreibers in jede Baueinheit eingesetzt werden kann. Daneben ist es durch Lösen beispielsweise der Schrauben 7 bis 14 oder der anderen analogen Befestigungselemente möglich, die Baueinheiten 1 bis 4 usw. untereinander zu vertauschen, so daß deren Anordnung und Reihenfolge gemessen an der Lauf- und Förderrichtung des Substrates 28 ebenfalls wahlweise verändert werden kann. Dies gilt insbesondere für den Fall, daß die Baueinheiten untereinander ungleiche äußere Abmaße aufweisen.
Das Ausführungsbeispiel nach Fig.2 zeigt Baueinheiten 33 bis 39. Von diesen haben die Baueinheiten 33 und 39 untereinander die gleiche Breite 40 und 41. Die Baueinheiten 34 bis 38 haben ebenfalls untereinander die gleichen jedoch andere Breiten 42 bis 46. Jede Baueinheit ist mit Hilfe der Schrauben 47 bis 60 mit einer im Inneren der maschinellen Einrichtung befindlichen Schiene 61 verschraubt. Die Seitenwände jeder Baueinheit sind direkt auf den Fußboden 62 einer Maschinenhalle od.dgl. aufgesetzt. Ebenso wie es im Ausführungsbeispiel nach Fig.1 mit Hilfe der Schrauben 7 bis 14 sowie entsprechender und in zweckdienlicher Weise verteilter Gewindebohrungen möglich ist, die Baueinheiten 1 bis 4 in der dargestellten Weise und Reihenfolge in Förderrichtung (Pfeil 29) des Substrates 28 gesehen anzuordnen oder in einer demgegenüber anderen Reihenfolge, beispielsweise in einer Reihenfolge 4, 2, 3, 1 oder 3, 1, 2, 4, ist es im Ausführungsbeispiel nach Fig.2 mit Hilfe der Schiene 61 und der Schrauben 47 bis 60 und entsprechender Gewindebohrungen in der Schiene 61 möglich, die in Fig.2 angegebene Anordnung der Baueinheiten je nach Wahl des Maschinenbetreibers bzw. der Notwendigkeit der Herstellung des jeweils zu be- oder verarbeitenden Substrates 28 auf einfache Weise zu verändern. Beispielsweise können in Laufrichtung des Substrates 28 (Pfeil 29) die Baueinheiten 34 und 36 miteinander vertauscht werden, so daß es in Richtung des Pfeiles 29 zu einer Abfolge der Baueinheiten 36,35, 34,38 kommen kann. Daneben ist es des weiteren möglich, die in die Baueinheiten 34 bis 38 einzusetzenden Kassetten 63 bis 67 aus der jeweiligen Baueinheit herauszunehmen und gegen eine andere Kassette auszutauschen. Auf diese Weise ergibt sich ebenfalls eine andere Abfolge der Be- oder Verarbeitungsvorgänge je nachdem, welche Kassette 63 bis 67 mit jeweils welchem Werkzeug zum Bearbeiten des Substrates 28 jeweils in welche Baueinheit eingesetzt ist. Dazu kommt, daß mit den Baueinheiten 33 und 39 Fördervorrichtungen hinzugefügt werden können, welche das bogen- oder bahnartige Substrat 28 durch die vorgeschlagene Einrichtung hindurchbefördern. Daneben kann die Anzahl der jeweiligen Baueinheiten dem jeweiligen Bedürfnis angepaßt werden, beispielsweise dadurch, daß eine der beiden Baueinheiten 33 oder 39 weggelassen werden kann, oder aber daß anstelle der Baueinheiten 34 bis 38 eine andere Anzahl von Baueinheiten zu einer Gesamtmaschine oder Teil einer Gesamtmaschine zusammengesetzt werden kann. Der Betreiber der maschinellen Einrichtung hat dadurch die Möglichkeit, seine Einrichtung weitgehend zu variieren oder dem jeweiligen Produktionsprozeß zum Be- oder Verarbeiten des Substrates 28 anzupassen. Außerdem kann er den Umfang der ihm zur Verfügung stehenden maschinellen Einrichtung nach und nach erweitern und somit successiv etwa gestiegenen Anforderungen anpassen. Daneben ist es ebenfalls möglich, eine oder mehrere Baueinheiten funktionell nicht zu besetzen, beispielsweise eine oder mehrere Kassetten 63 bis 67 in die jeweilige Baueinheit nicht einzusetzen. In die Baueinheit 63 sind beispielsweise Werkzeuge 68 zum sog. Querperforieren des Substrates 28 eingesetzt, welche mit einem Druckzylinder 69 zusammenwirken. Zwischen den Werkzeugen 68 und dem Druckzylinder 69 läuft das Substrat zu dessen Be- oder Verarbeitung hindurch. Die Werkzeuge 68 sind auf einem in der Kassette 63 drehbar und zweckentsprechend gelagerten Zylinder 70 ebenfalls zweckentsprechend befestigt. Die Zylinder 70 und 69 sind ihrerseits zweckentsprechend in der Kassette 63 drehbar gelagert. Der Zylinder 70 wird mit Hilfe eines Motors 71 angetrieben, der seine Steuer- und Antriebsimpulse über mindestens eine Leitung 72 von einer Steuereinheit 73 erhält. In analoger Weise ist beispielsweise die Kassette 66 mit einem Zylinder 74 versehen, der mit einem Druckzylinder 75 zusammenarbeitet. Auf dem Zylinder 74 sind Werkzeuge 76 für die Herstellung sog. Randlochungen zweckentsprechend befestigt. Der Zylinder 74 wird mit Hilfe eines Motors 77 angetrieben, welcher seine Steuer- und Antriebsimpulse über Leitung 78 ebenfalls von der Steuereinheit 73 erhält. Die Druckzylinder 69 und 75 können beispielsweise durch Verzahnung mechanisch von den Zylindern 70 und 74 aus angetrieben werden, wobei der jeweilige Motor jeder Baueinheit vorzugsweise ein elektrischer Schrittmotor und an der jeweiligen Kassette befestigt ist. Es ist jedoch möglich, den Druckzylindern in analoger Weise jeweils einen eigenen Antriebsmotor zuzuordnen, der von der Steuereinheit 73 in entsprechender Weise gesteuert werden kann. Zeigen die Kassetten 63 und 66 sog. Zweizylinderkassetten oder Zweizylindereinschübe, d.h. solche Kassetten, in denen zwei derartig miteinander zusammenarbeitende Zylinder, die mit den verschiedensten Werkzeugen besetzt sein können, die miteinander zusammenwirken, um das Substrat 28 in gewünschter Weise zu be- oder verarbeiten, so ist der in die Kassette 67 beispielsweise eingesetzte Zylinder 79 als sog. Einzylindereinschub zu bezeichnen. Dieser Zylinder wird analog mittels Motor 80, Leitung 81 und Steuereinheit 73 angetrieben. Der mit Zylinder 79 zusammenwirkende Druckzylinder 82 ist beispielsweise mit Hilfe eines Schwenkhebels 83 und eines maschinengestell- oder baueinheitenfesten Schwenklagers 84 in der Baueinheit 38 schwenkbar gelagert, ohne daß die Zylinderhalterung in einem Einschub od.dgl. ihrerseits gehalten oder unterstützt wird. Gleichwohl kann die mindestens eine Seitenwand der Kassette 67 von der Kante 85 bis zur Kante 86 reichen. Die Seitenwände der Kassette können aber auch von der Kante 85 bis zu der Kante 87 reichen, so daß entweder ein sog. Leerstück oder Blindstück zwischen die Kanten 86 und 87 eingesetzt wird oder aber die Baueinheit 38 und somit der für die Kassette 67 vorgesehene Einschnitt oder Ausschnitt der Baueinheit entsprechend ausgestaltet ist, d.h. beispielsweise nur von der Kante 85 bis zur Kante 87. In die Baueinheiten 35 und 36 sind Kassetten 64 und 65 beispielsweise eingesetzt, welche sog. Revolver enthalten, die wiederum mehrere Werkzeuge, Werkzeugpaare oder Werkzeuganordnungen zu tragen und zu unterstützen in der Lage sind. Beispielsweise enthält die Kassette 64 einen dreiarmigen Revolver mit Werkzeugen 88 bis 90, wobei diese Werkzeuge beispielsweise Werkzeuge zum Längsperforieren darstellen können. Beispielsweise sind in Blickrichtung auf Fig.2 mehrere Werkzeuge 88 hintereinander konzentrisch angeordnet, ebenso mehrere Werkzeuge 89 oder 90. Die gegenseitigen Abstände dieser konzentrischen Werkzeuge können sich jedoch voneinander unterscheiden, so daß es möglich ist, durch einfaches Drehen des Revolvers und anschließendem Feststellen desselben entweder die Werkzeuge bzw. Werkzeugsätze 88, 89 oder 90 zum Einsatz kommen zu lassen. Auf diese Weise kann beispielsweise eine Längsperforation in Blickrichtung auf Fig.1 an verschiedenen Stellen in das Substrat 28 eingebracht werden, d.h., daß über die Breite des Substrates 28 gesehen die Längsperforation an verschiedenen Stellen oder Spuren oder Streifen in das Substrat 28 eingearbeitet werden kann oder daß durch schnelles Verschwenken des Revolvers beispielsweise von durchgehender auf abgesetzte Längsperforation gewechselt werden kann, sofern die Revolverarme unterschiedliche Werkzeuge tragen. Die Werkzeuge 88 bis 90 werden beispielsweise mit Hilfe eines zentralen Zahnrades 91 von einem Motor 92 drehbar angetrieben, der seine Steuer- und Antriebsimpulse beispielsweise mit Hilfe der Leitung 93 von der Steuereinheit 73 erhält. Analoges gilt hinsichtlich des vierarmigen Revolvers der Kassette 65 in der Baueinheit 36. Hier wird ein entsprechender Schrittmotor 94 über Leitung 95 von der Steuereinheit 73 mit Antriebsimpulsen versorgt. In die Baueinheit 33 sind Zylinder 96 und 97 eingesetzt und drehbar gelagert. Beide Zylinder oder aber auch nur einer davon, beispielsweise der Zylinder 97, werden von einem Motor 98 über Leitung 99 und Steuereinheit 73 angetrieben. Analoges gilt hinsichtlich der Baueinheit 39 mit Zylinder 100, Zylinder 101, Motor 102 und Leitung 103. Die Leitung 103 ist ebenfalls mit der Steuereinheit 73 verbunden. Daneben verbindet die Leitung 104 die Steuereinheit 73 mit einem Beobachtungsgerät 105, welches das in die maschinelle Einrichtung einlaufende Substrat 28 beobachtet. Mit Hilfe eines geeigneten Beobachtungsgerätes 105 können entweder in dem Substrat 28 bereits befindliche Ausschnitte beobachtet werden, aber auch beispielsweise durch Aufdrucken hervorgerufene sog. Registermarken oder aber auch auf dem Substrat befindliche Aufdrucke. Das Beobachtungsgerät läßt sich den jeweiligen Situationen leicht anpassen. Je nach Beobachtung und Lage der gemeldeten Ereignisse, die auf dem Substrat 28 bereits vorhanden und von dem Beobachtungsgerät 105 ermittelt werden, können die Fördervorrichtungen 96/97 und 100/101 beispielsweise derart gesteuert und/oder betrieben werden, daß das zu be- oder verarbeitende Substrat bei jedem Bearbeitungsvorgang in jeder der genannten Baueinheiten eindeustraffgehalten werden kann. Daneben werden die Antriebe für die einzelnen Baueinheiten bzw. Kassetten ebenfalls auf Grund der Beobachtungen des Beobachtungsgerätes 105 gesteuert und/oder angetrieben, so daß die Be- oder Verarbeitung des Substrates 28 genau an gewünschten Stellen erfolgen kann, d.h. auch an solchen Stellen, die mit bereits auf dem Substrat befindlichen Markierungen, wie beispielsweise Aufdruck, Registermarken od.dgl. in einem bestimmten und gewollten Abstand stehen sollen. Dadurch, daß der Betreiber der maschinellen Einrichtung einerseits leicht entscheiden kann, welche der genannten Baueinheiten an welcher Stelle der Schiene 61 befestigt werden und andererseits dadurch, daß je nach Wahl der jeweiligen Kassette mit dem jeweiligen Werkzeug oder den jeweiligen Werkzeugen deren Einsetzen in die jeweils gewünschte Baueinheit erfolgt, kann der Betreiber in sehr weiten und variablen Grenzen entscheiden, in welcher Weise und in welcher Bearbeitungsabfolge er das jeweils vorliegende Substrat 28 maschinell zu bearbeiten wünscht. Da die Kassetten aufnehmenden Baueinheiten vorzugsweise untereinander gleiche äußere Abmaße haben, ist es möglich, jede gewünschte Kassette mit jedem denkbar möglichen Werkzeug in jeweils jede Baueinheit wahlweise einzusetzen, so daß beispielsweise die Querperforation am Anfang des Be- oder Verarbeitungsprozesses stehen kann oder aber auch in deren Mitte oder gar am Ende. Daneben ist es möglich, beispielsweise Abheftlochung und Randlochung zu Beginn des Be- oder Verarbeitungsprozesses vorzunehmen und Längs- und Querperforieren oder gar insbesondere Querschneiden, beispielsweise von Bahnen in Bogen, erst am Ende der Be- oder Verarbeitungsstrecke durchzuführen. Außerdem ist es möglich, beispielsweise die Breite 40 der Baueinheit 33 ebenso groß zu wählen wie beispielsweise die Breite 42 der Baueinheit 34, so daß alle Baueinheiten untereinander die gleiche Breite, in Fig.2 bzw. in Laufrichtung 29 des Substrates 28 gleiche Länge haben. Das Ausführungsbeispiel nach Fig.3 zeigt Baueinheiten 106 bis 110 mit untereinander nicht unbedingt gleichen Abmaßen 112 bis 116. Die Baueinheit 106 enthält beispielsweise eine Förderwalze 117 mit Andruckrolle 118, welche das Substrat 28 in Richtung des Pfeiles 29 fördern. Ein Motor 119 treibt die Förderwalze 117 an, je nachdem, wie dies ein entsprechendes Steuergerät dem Motor 119 vorgibt. Die Baueinheit 107 enthält einen drehbar gelagerten Zylinder 120 mit daran befestigten Werkzeugen zum Herstellen, Stanzen usw. der sog. Randperforation. Diese Werkzeuge arbeiten mit einem Druckzylinder 121 zusammen, der seinerseits mit Hilfe eines Motors 122 nach Maßgabe eines Steuergerätes angetrieben werden kann. Daneben enthält die Baueinheit 107 eine Absaugeinrichtung 123 zum Abführen der durch den Stanzvorgang od.dgl. hervorgerufenen und als Abfall zu bezeichnenden Ausschnitte, Butzen etc. Die Baueinheit 108 enthält eine Kassette 124, welche analog ist zu den Kassetten nach Fig.2; jedoch enthält die Baueinheit 108 zusätzlich eine Fördervorrichtung mit den Förderwalzen 125 bis 127. Der zugehörige Motor 128 wirkt hier jedoch auf den Druckzylinder 129, der seinerseits mittels Verzahnung od.dgl. den Werkzeugzylinder 130 antreibt. Der Motor 128 kann zugleich über mechanisches Getriebe od.dgl. auch auf die Förderwalzen 125 bis 127 wirken. Daneben ist es möglich, die an jeder Baueinheit wirkenden Antriebe mechanisch zu anderen Antriebsgruppen zusammenzufassen oder jedem Zylinder und jeder Walze der Fördervorrichtung jeweils einen eigenen Motor zuzuordnen. Die Motoren sind vorzugsweise sog. Schrittmotoren, die impulsgesteuert den Vorgaben oder Befehlen eines entsprechenden Steuergerätes nachkommen, also derart umlaufen, wie es das Steuergerät befiehlt. Hierfür können die Befehlsleitungen zwischen Steuergerät und dem jeweiligen Motor so ausgelegt sein, daß Winkelsteuerung und Antriebsleistung unabhängig voneinander übertragen werden. Die Baueinheit 109 ist im wesentlichen zu der Baueinheit 108 analog, jedoch kann die Kassette 131 der Baueinheit 109 einen Werkzeugzylinder 132 enthalten, welcher andere Werkzeuge trägt als der Werkzeugzylinder 130 der Kassette 124. Beispielsweise kann der Werkzeugzylinder 130 Werkzeuge zum Herstellen der sog. Abheftlochung enthalten, wohingegen der Werkzeugzylinder 132 Werkzeuge zum Herstellen einer anderen Abheftlochung mit anderen gegenseitigen Abständen der jeweiligen Werkzeuge für andersartige Abheftlochungen enthält. Dadurch ist es beispielsweise möglich, Abheftlochungen nach DIN-Norm oder aber auch nach einer anderen von DIN abweichenden Norm herzustellen, ohne daß die maschinelle Einrichtung auf aufwendige Art und Weise umgestellt oder gar durch eine andere ersetzt werden müßte. Die Baueinheit 110 enthält einen Motor 133, welcher ebenfalls von einem entsprechenden Steuergerät gesteuert werden kann. Der Motor 133 setzt einen Druckzylinder 134 in drehende Bewegung, welcher seinerseits, beispielsweise durch Verzahnung od.dgl., auf einen Werkzeugzylinder 135 einwirkt und diesen drehend antreibt. Die auf dem Werkzeugzylinder 135 befindlichen Werkzeuge sind beispielsweise zum Herstellen einer Querperforation geeignet, also einer solchen Perforation, welche senkrecht angeordnet ist zu der durch den Pfeil 29 angegebenen Förder- oder Laufrichtung des Substrates 28. Die Baueinheiten 106 bis 110 können beispielsweise auf eine Schiene, Platte od.dgl. 136 aufgesetzt und an dieser befestigt werden, wobei die Schiene 136 Anschläge 137 und 138 enthält. Die Baueinheit 106 liegt beispielsweise unmittelbar an dem Anschlag 137 an, die Baueinheit 107 an der Baueinheit 106, die Baueinheit 108 an der Baueinheit 107, die Baueinheit 109 an der Baueinheit 108 und die Baueinheit 110 an der Baueinheit 109. Zwischen dem Anschlag 138 und der Baueinheit 110 ist mindestens ein Druckmittelzylinder 139 eingesetzt, welcher in der Lage ist, alle genannten Baueinheiten gegen den Anschlag 137 zu verfahren bzw. zu drücken, so daß alle Baueinheiten paketartig aneinanderliegend zu einem größeren Ganzen verbunden sind. Durch Abstellen des Druckes in dem Druckmittelzylinder 139 ist es beispielsweise möglich, die einzelnen Baueinheiten voneinander zu lösen und beispielsweise eine oder mehrere davon durch andere oder analog geartete Baueinheiten zu ersetzen. Dieser Austausch ist mit relativ einfachen Mitteln möglich. Daneben ist es auch hier ebenfalls möglich, die genannten Kassetten in den in Rede stehenden Baueinheiten durch andere, andersartige oder analoge zu ersetzen, so daß dem Betreiber der maschinellen Einrichtung auch hier weitestmögliche Variabilität in der Wahl bzw. Zusammenstellung seiner maschinellen Einrichtung gegeben ist. Beispielsweise können die Kassetten oder auch die Baueinheiten durch einen Kran aus der gesamtmaschinellen Einrichtung entfernt oder in diese eingesetzt werden, wobei der Kran in der Maschinenhalle über der in Rede stehenden maschinellen Einrichtung angeordnet sein kann. Insbesondere kommen hier sog. Laufkrane oder Laufkatzen in Betracht. Daneben ist es möglich, die Kassetten und/oder auch die Baueinheiten auf entsprechend geeignete Wagen, Schlitten od.dgl. umzusetzen, so daß sie auf diese Weise aus der Maschine entfernt oder aus einem Lager zu der Maschine hingeholt werden können. Mit Hilfe beispielsweise des Steuergerätes 73 ergibt sich ein phasengenauer Antrieb, ein sog. Einzelantrieb für jeweils mindestens einen aller Werkzeug- oder Bearbeitungszylinder sowie für Förderwalzen, Fördertrommeln, -zylinder oder dgl.; außerdem können ggfs. mehrere dieser Zylinder oder Walzen etc. mechanisch, beispielsweise durch Verzahnungen zu Gruppen zweckdienlich zusammengefaßt sein. Da die Werkzeug- bzw. Bearbeitungszylinder unterschiedliche Werkzeuge tragen können für die Durchführung jeweils unterschiedlicher trennender Be- oder Verarbeitungsverfahren, die das Substrat 28 jeweils in mehrere Teile trennen bzw. zertrennen - z.B. Etiketten aus dem Substrat 28 ausstanzen, Herstellung der Randperforation, Herstellung der Abheftperforation, Herstellung einer Querperforation, Herstellung sonstiger längs, d.h. in Laufrichtung des Substrates 28 liegender Perforationen od.dgl., Herstellung von quer zu dieser Laufrichtung angeordneter Perforationen od.dgl. usw. - ergeben sich vielfältige Möglichkeiten, um das Substrat 28 nach den verschiedensten Arbeits- oder Herstellungsverfahren zu bearbeiten. Der Betreiber der maschinellen Einrichtung kann somit weitgehend den verschiedensten Wünschen nach Herstellung eines jeweiligen Substrates nachkommen, so daß er mit relativ wenig Aufwand an Geräten bzw. maschinellen Einrichtungen einem weiten Produktionsbereich von herzustellenden Substraten entsprechen kann. Die Baueinheiten für die verschiedensten Herstellungsverfahren werden ergänzt beispielsweise durch weitere Baueinheiten wie beispielsweise die Baueinheiten 106 oder 33 und 39, welche sog. Hilfseinrichtungen für die genannten Be- oder Verarbeitungsvorgänge enthalten und welche relativ zu dem Substrat 28 in Richtung des Pfeiles 29 stromauf oder stromab der die Bearbeitungswerkzeuge enthaltenden Baueinheiten wie beispielsweise die Baueinheiten 197 bis 109 oder 34 bis 38 angeordnet sein können. Derartige Hilfsbaueinheiten können jedoch auch zwischen den anderen Baueinheiten angeordnet werden. Ergänzend hierzu kommen beispielsweise auch Hilfseinrichtungen hinzu wie z.B. Einrichtungen zum Abführen oder Absaugen von Abfall wie beispielsweise die genannte Absaugeinrichtung 123 oder aber auch beispielsweise die sog. Randstreifenaufwickeleinrichtung. Die Fördervorrichtungen 125 bis 127 fördern das Substrat 28 in unmittelbarer Nähe des jeweiligen Werkzeugzylinders der jeweiligen Baneinheit bzw. Kassette. Die das Substrat 28 beobachtende Einrichtung 105 ist meist stromauf der Baueinheiten mit den Werkzeugen usw. angeordnet, weniger stromab dieser Werkzeuge. Die Motoren können daneben auch sog. Servomotoren sein; die sog. Abheftlochung kann auch eine sog. Abheftperforation sein. Außerdem kann auch eine der Baueinheiten oder mindestens eine der Baueinheiten oder auch der Kassetten eine Fördervorrichtung wie beispielsweise die Fördervorrichtung 111 enthalten, wodurch diese Fördervorrichtung in der unmittelbaren Nähe eines Werkzeuge tragenden oder unterstützenden Zylinders wie beispielsweise des Zylinders 120 zu liegen käme. Diese Fördervorrichtung könnte zudem relativ zu dem Substrat stromauf des Werkzeugzylinders angeordnet sein oder insbesondere auch stromab davon. Außerdem können auch sowohl die Fördervorrichtungen wie z.B. die Fördervorrichtung 96/97 als auch die (benachbarten) Werkzeugzylinder mittels Verzahnungen miteinander verbunden sein. Die Fördervorrichtungen 96,97 und 100,101 sind beispielsweise in Richtung des Pfeiles 29 stromauf oder stromab aller jeweils im Einsatz befindlichen Baueinheiten bzw. Kassetten od.dgl. angeordnet.

### Teileliste

- 1: Baueinheit
- 2: Baueinheit
- 3: Baueinheit
- 4: Baueinheit
- 5: Maschinengestell
- 6: Teil
- 7: Schraube
- 8: Schraube
- 9: Schraube
- 10: Schraube
- 11: Schraube
- 12: Schraube
- 13: Schraube
- 14: Schraube
- 15: Seitenwand
- 16: Kante
- 17: Kante
- 18: Kante
- 19: Kante
- 20: Kante
- 21: Kante
- 22: Kante
- 23: Kante
- 24: Kassette
- 25: Kassette
- 26: Kassette
- 27: Kassette
- 28: Substrat
- 29: Pfeil
- 30: Fördervorrichtung
- 31: Zylinder
- 32: Zylinder
- 33: Baueinheit
- 34: Baueinheit
- 35: Baueinheit
- 36: Baueinheit
- 37: Baueinheit
- 38: Baueinheit
- 39: Baueinheit
- 40: Breite
- 41: Breite
- 42: Breite
- 43: Breite
- 44: Breite
- 45: Breite
- 46: Breite
- 47: Schraube
- 48: Schraube
- 49: Schraube
- 50: Schraube
- 51: Schraube
- 52: Schraube
- 53: Schraube
- 54: Schraube
- 55: Schraube
- 56: Schraube
- 57: Schraube
- 58: Schraube
- 59: Schraube
- 60: Schraube
- 61: Schiene
- 62: Fußboden
- 63: Kassette
- 64: Kassette
- 65: Kassette
- 66: Kassette
- 67: Kassette
- 68: Werkzeug
- 69: Druckzylinder
- 70: Zylinder
- 71: Motor
- 72: Leitung
- 73: Steuereinheit
- 74: Zylinder
- 75: Druckzylinder
- 76: Werkzeug
- 77: Motor
- 78: Leitung
- 79: Zylinder
- 80: Motor
- 81: Leitung
- 82: Druckzylinder
- 83: Schwenkhebel
- 84: Schwenklager
- 85: Kante
- 86: Kante
- 87: Kante
- 88: Werkzeug
- 89: Werkzeug
- 90: Werkzeug
- 91: Zahnrad
- 92: Motor
- 93: Leitung
- 94: Motor
- 95: Leitung
- 96: Zylinder
- 97: Zylinder
- 98: Motor
- 99: Leitung
- 100: Zylinder
- 101: Zylinder
- 102: Motor
- 103: Leitung
- 104: Leitung
- 105: Beobachtungsgerät
- 106: Baueinheit
- 107: Baueinheit
- 108: Baueinheit
- 109: Baueinheit
- 110: Baueinheit
- 111: Fördervorrichtung
- 112: Abmaß
- 113: Abmaß
- 114: Abmaß
- 115: Abmaß
- 116: Abmaß
- 117: Förderwalze
- 118: Andruckrolle
- 119: Motor
- 120: Zylinder
- 121: Druckzylinder
- 122: Motor
- 123: Absaugeinrichtung
- 124: Kassette
- 125: Förderwalze
- 126: Förderwalze
- 127: Förderwalze
- 128: Motor
- 129: Druckzylinder
- 130: Werkzeugzylinder
- 131: Kassette
- 132: Werkzeugzylinder
- 133: Motor
- 134: Druckzylinder
- 135: Werkzeugzylinder
- 136: Schiene
- 137: Anschlag
- 138: Anschlag
- 139: Druckmittelzylinder

## Patentansprüche

1. Einrichtung zum trennenden Be- oder Verarbeiten eines Substrates (28) mit relativ zu einer Gesamtmaschine austauschbaren, Be- oder Verarbeitungswerkzeuge enthaltenden, in mehreren vorgesehenen Positionen befestigbaren oder aus der Gesamtmaschine entfernbaren Baueinheiten ( ¹⁻⁴,33-39,106-110), wobei die Baueinheiten ( 1-4,33-39,106-110) mit der Gesamtmaschine verbindbar und die in den Baueinheiten ( 1-4,33-39,106-110) auf drehbar gelagerten Zylindern od.dgl. befestigbaren Verarbeitungswerkzeuge antreibbar sind, gekennzeichnet durch Baueinheiten ( 1-4,33-39,106-110) für mehr als ein Be- oder Verarbeitungsverfahren, wobei mehrere Baueinheiten ( 1-4,33-39,106-110) wahlweise nebeneinander positionierbar und ggfs. aneinanderreihbar sind und die gegenseitige Anordnung der Baueinheiten ( 1-4,33-39,106-110) beliebig kombinierbar ist.

2. Einrichtung nach Anspruch 1, dadurch gekennzeichnet, daß in mindestens eine Baueinheit ( 1-4,33-39,106-110) eine auswechselbare, die jeweiligen Bearbeitungswerkzeuge enthaltende Kassette (24-27,63-67, 124) einsetzbar ist.

3. Einrichtung nach Anspruch 1, dadurch gekennzeichnet, daß jede Baueinheit ( 1-4,33-39,106-110) einen separaten Antrieb enthält.

4. Einrichtung nach Anspruch 1, gekennzeichnet durch mindestens eine in Laufrichtung (29) des zu be- oder verarbeitenden Substrates (28) jeweils stromauf und/oder stromab des jeweiligen im Einsatz befindlichen Be- oder Verarbeitungswerkzeuges angeordnete innerhalb einer Baueinheit ( 1-4,33-39,106 -110) befindliche Fördervorrichtung (125-127) für das zu be- oder verarbeitende Substrat (28).

5. Einrichtung nach Anspruch 1, gekennzeichnet durch mindestens eine die jeweils gewählte maschinelle Einrichtung ergänzende, in Laufrichtung (29) des zu be- oder verarbeitenden Substrates (28) stromauf und/oder stromab aller jeweils in der maschinellen Einrichtung befindlichen Baueinheiten ( 1-4 ,33-39,106-110) angeordnete Fördervorrichtung (31,32,96,97,100,101,117,118) für das zu be- oder verarbeitende Substrat (28).

6. Einrichtung nach Anspruch 1, gekennzeichnet durch eine den jeweiligen Antrieb (71,77,80,92,98,102) steuernde, in Laufrichtung (29) des zu be- oder verarbeitenden Substrates (28) jeweils stromauf der Be- oder Verarbeitung angeordnete beobachtende Einrichtung (105).

7. Einrichtung nach Anspruch 1,gekennzeichnet durch mindestens eine mindestens einen verschiedenartige Be- oder Verarbeitungswerkzeuge unterstützenden Revolver (88,89,90) enthaltende Kassette (64, 65).

8. Einrichtung nach Anspruch 1, dadurch gekennzeichnet, daß ein mit dem jeweiligen in der jeweiligen Kassette (24-27,63-67,124) befindlichen Be- oder Verarbeitungswerkzeugen zusammenwirkender Druckzylinder (69,96,75,82,122,134) in der Kassette (24-27,63-67,124) oder in der Baueinheit ( 1-4, 33-39,106-110) drehbar abgestützt ist.

9. Einrichtung nach Anspruch 1, dadurch gekennzeichnet, daß mindestens eine Fördervorrichtung (96,97, 100,101,118,119,125-128) in mindestens eine Baueinheit ( 1-4,33-39,106-110) integrierbar ist.
